Europäisches Patentamt

European Patent Office

Office européen des brevets

(11) Veröffentlichungsnummer: **0 371 392**
**A2**

## (12) EUROPÄISCHE PATENTANMELDUNG

(21) Anmeldenummer: 89121596.4

(22) Anmeldetag: 23.11.89

(51) Int. Cl.⁵: **B29C 51/00, B29C 51/42,**
**B29C 67/22, B29C 51/18**

(30) Priorität: 01.12.88 DE 8814977 U

(43) Veröffentlichungstag der Anmeldung:
06.06.90 Patentblatt 90/23

(84) Benannte Vertragsstaaten:
AT BE CH DE ES FR GB GR IT LI LU NL SE

(71) Anmelder: Krämer & Grebe GmbH & Co. KG
Maschinenfabrik
Im Ruttert
D-3560 Biedenkopf-Wallau(DE)

(72) Erfinder: Schmeck, Alfred
Pfefferacker 2
D-3560 Biedenkopf(DE)
Erfinder: Grusdt, Rainer
Friedrich-Ebert-Ring 16
D-6470 Büdingen 2(DE)

(74) Vertreter: Missling, Arne, Dipl.-Ing.
Patentanwalt Bismarckstrasse 43
D-6300 Giessen(DE)

(54) **Vorrichtung zum Tiefziehen einer durch Wärmeeinwirkung aufschäumbaren Folie.**

(57) Die tiefzuziehende Folie muß in geeigneter Weise erwärmt und aufgeschäumt werden, bevor sie einer Tiefziehpresse zugeführt wird. Durch ungleichmäßige Aufheizung werden beim Tiefziehvorgang unterschiedliche Wandstärken ausgebildet, weiterhin treten bei der Folie Oberflächenunregelmäßigkeiten und möglicherweise Risse auf.

Bei dem erfindungsgemäßen Verfahren ist vorgesehen, daß die Folie durch Flächenberührung mit zumindest einer Heizplatte (1, 2) unter Verhinderung einer Aufschäumung erwärmt wird, daß die Folie nachfolgend unter flächigem Kontakt mit zumindest einer Heizplatte (3, 4) unter Aufschäumung erwärmt wird, daß die Folie nachfolgend mittels einer beheizten Tiefziehpresse (5) verformt wird und daß die verformte Folie mit einer gekühlten Tiefziehpresse (6) abgekühlt wird.

Die Erfindung ist insbesondere zur Verarbeitung von aufschäumbaren Polystarinfolien verwendbar, welche als Unterfolie für Verpackungseinheiten dient.

Fig. 2

## Verfahren und Vorrichtung zum Tiefziehen einer durch Wärmeeinwirkung aufschäumbaren Folie

Die Erfindung bezieht sich auf ein Verfahren sowie auf eine Vorrichtung zum Tiefziehen einer durch Wärmeeinwirkung aufschäumbaren Folie.

Folien, beispielsweise Polystarinfolien, welche durch Wärmeeinwirkung aufschäumbar sind, sind aus dem Stand der Technik bekannt. Diese Folien werden beispielsweise verwendet, um tiefgezogene Behälter oder Behälterunterteile zu erzeugen, in welche die zu verpackenden Güter eingelegt werden können. Die tiefgezogenen Behälter werden üblicherweise anschließend mittels einer Folie verschweißt oder versiegelt.

Aus dem Stand der Technik ist es bekannt, derartige aufschäumbare Folien durch Strahlungserwärmung zu erhitzen und anschließend in einer Kaltpreßform zu verformen. In der Kaltpreßform erfolgt sowohl eine Verformung der Folie als auch eine Stabilisierung durch die mittels der Kaltpreßform bewirkte Abkühlung der Folie. Dieses aus dem Stand der Technik bekannte Verfahren weist den Nachteil auf, daß einerseits nicht sichergestellt ist, daß die Folie gleichmäßig über ihren gesamten Bereich erwärmt werden kann. Die ungleichmäßige Erwärmung führt zu einem ungleichmäßigen Aufschäumen und führt bei dem nachfolgenden Tiefziehvorgang zu der Gefahr unterschiedlicher Wanddickenbildung oder dem Auftreten von Rissen. Weiterhin erweist es sich als nachteilig, daß die Folie durch den Einfluß der Strahlungswärme ungleichmäßig aufschäumt, so daß der Behälter über seinen Querschnitt mit verschiedenen Wanddicken versehen ist. Ein weiterer Nachteil des bekannten Verfahrens besteht darin, daß, bedingt durch die ungleichmäßige Erwärmung der Folie, die Verformung in der Kaltpreßform nicht gleichmäßig erfolgen kann, da insbesondere die Ecken der Form entweder nicht vollständig ausgefüllt werden oder die Folie in diesen Bereichen, bedingt durch die frühzeitige Abkühlung, reißt. Es treten somit insbesondere an den Ecken und Kanten dünne Wandbereiche auf, welche unerwünscht sind und insbesondere die Festigkeit des durch den Tiefziehvorgang erzeugten Folienbereichs schwächen.

Der Erfindung liegt die Aufgabe zugrunde, ein Verfahren und eine Vorrichtung der eingangs genannten Art zu schaffen, welche bei einfachem Aufbau und einfacher, betriebssicherer Handhabbarkeit die aus dem Stand der Technik bekannten Nachteile vermeiden und die Ausbildung exakter, maßgenauer tiefgezogener Folienbereiche ermöglichen.

Erfindungsgemäß wird die Aufgabe hinsichtlich des Verfahrens dadurch gelöst, daß die Folie durch Flächenberührung mit zumindest einer Heizplatte unter Verhinderung einer Aufschäumung erwärmt wird, daß die Folie nachfolgend unter flächigem Kontakt mit zumindest einer Heizplatte unter Aufschäumung erwärmt wird, daß die Folie nachfolgend mittels einer beheizten Tiefziehpresse verformt wird und daß die verformte Folie in einer gekühlten Tiefziehpresse abgekühlt wird.

Bezüglich der Vorrichtung ist die erfindungsgemäße Aufgabe dadurch gelöst, daß zumindest eine, im wesentlichen ebene Heizplatte vorgesehen ist, welcher, in Durchlaufrichtung nachfolgend, eine beheizbare erste Tiefziehpresse nachgeordnet ist, welcher, bezogen auf die Durchlaufrichtung, eine zweite Tiefziehpresse folgt.

Sowohl das erfindungsgemäße Verfahren als auch die erfindungsgemäße Vorrichtung zeichnen sich durch eine Reihe erheblicher Vorteile aus. Da erfindungsgemäß die Folie zunächst vorgewärmt wird, ohne daß eine Aufschäumung auftritt, ist sichergestellt, daß die gesamte zu erwärmende Fläche der Folie gleichmäßig erwärmt und damit vorgeheizt wird. Der zweite Verfahrensschritt gibt die Möglichkeit, die vorgewärmte Folie in gesteuerter Weise aufzuschäumen, wobei die Aufschäumung in gleichmäßiger Weise über den gesamten Folienbereich erfolgen kann. Da die Folie bereits in dem ersten Verfahrensschritt entsprechend vorgewärmt wurde, ist nur noch eine relativ geringe zusätzliche Erwärmung erforderlich, welche ohne weitere Schwierigkeiten gleichmäßig über die gesamte Fläche der Folie erfolgen kann.

Die erfindungsgemäß vorgesehene Tiefziehpresse, in welcher die nunmehr aufgeschäumte Folie tiefgezogen wird, ergibt die Möglichkeit, die Folie in einem gut verformbaren, aufschäumbaren Zustand zu halten, so daß insbesondere Kanten und Wandbereiche des auszubildenden Behälters, welche einer starken Verformung unterworfen sind, präzise und exakt ausgebildet werden können. Dabei erweist es sich als besonders vorteilhaft, daß die Folie während dieses Tiefziehvorganges nicht erkalten kann, so daß sichergestellt ist, daß auch derartige kritische Bereiche problemlos umgeformt werden können. Mittels der verfahrensgemäß vorgesehenen Kühlung der verformten oder tiefgezogenen Folie in einer gekühlten Tiefziehpresse erfolgt eine Stabilisierung der Folie, d. h. eine Abkühlung unter den Temperaturbereich, in welchem die tiefgezogene Folie schrumpft oder sich in der Folie Spannungen aufbauen können. Durch die Abkühlung der Folie innerhalb der Tiefziehpresse wird sichergestellt, daß die umgeformten oder tiefgekühlten Folienbereiche exakt ihre Form beibehalten.

Die erfindungsgemäße Vorrichtung weist den Vorteil auf, daß es möglich ist, eine im wesentlichen ebene Heizplatte zu verwenden, welche, bedingt durch die dabei mögliche Flächenpressung einen besonders guten Wärmeübergang und damit eine besonders gleichmäßige Erwärmung der Folie ermöglicht.

In einer besonders vorteilhaften Ausgestaltung der Vorrichtung ist vorgesehen, daß die zweite Tiefziehpresse kühlbar ausgebildet ist. Durch die Möglichkeit, gezielt der Folie Wärme zu entziehen, kann der Abkühlvorgang erheblich beschleunigt werden, so daß die Gesamtvorrichtung in einer wesentlich kürzeren Taktzeit arbeiten kann.

In einer weiteren, besonders vorteilhaften Ausgestaltung der erfindungsgemäßen Vorrichtung ist vorgesehen, daß die erste Tiefziehpresse sowohl einen beheizbaren Pressenstempel, als auch eine beheizbare Preßform umfaßt. Durch die Möglichkeit, die tiefzuziehende Folie während des Tiefziehvorganges beidseitig zu erwärmen, ist sichergestellt, daß die Folie insbesondere in den tiefgezogenen Bereichen über ihre Dicke einen gleichmäßigen Aufbau aufweist, wobei das Auftreten von Spannungen, welches zu Schrumpfungen und ähnlichem führen kann, vermieden wird. Die erfindungsgemäße Vorrichtung kann sowohl mit einer einzigen ebenen Heizplatte, welche in einer Bearbeitungsstation angeordnet ist, versehen sein, es ist jedoch auch möglich, zwei Bearbeitungsstationen vorzusehen, welche jeweils mit zumindest einer Heizplatte versehen sind. Bei Verwendung zweier Bearbeitungsstationen kann die Durchlaufgeschwindigkeit erheblich gesteigert werden, da jeweils nur ein Teil der erforderlichen Wärmemenge zugeführt werden muß.

Bevorzugterweise ist die erfindungsgemäße Vorrichtung so ausgestaltet, daß jeweils ein Paar von Heizplatten zur beidseitigen Erwärmung der Folie vorgesehen ist. Bei dieser Ausgestaltungsform wird zum einen eine schnelle, gleichmäßige Erwärmung der Folie sichergestellt, zum anderen wird verhindert, daß, insbesondere bei dickeren Folien, einige Querschnittsbereiche bereits den zum Aufschäumen erforderlichen Temperaturbereich erreicht haben, während andere Bereiche noch kühler sind.

Um die Erwärmung der Folie in den einzelnen Bearbeitungsstationen exakt steuern zu können und um insbesondere in der zweiten Bearbeitungsstation ein gleichmäßiges Aufschäumen der Folie sicherzustellen, kann es sich als besonders günstig erweisen, wenn das erste Paar von Heizplatten zur Erwärmung der Folie in einen gegenseitigen Abstand bringbar ist, welcher der Dicke der nichtaufgeschäumten Folie entspricht. Weiterhin ist es besonders günstig, wenn das zweite Paar von Heizplatten zur Erwärmung und zum Aufschäumen der Folie in einen gegenseitigen Abstand bringbar ist, welcher der Dicke der aufgeschäumten Folie entspricht. Durch diese Maßnahme wird in der ersten Bearbeitungsstation ein Aufschäumen, bedingt durch den aufgebrachten Druck, verhindert, während in der zweiten Bearbeitungssstation die mögliche, durch das Aufschäumen gebildete Dicke der Folie durch den Abstand der beiden Heizplatten begrenzt wird. Es ist damit möglich, die Folie in gezielter Weise während der Vorheizung, d. h. vor dem Tiefziehvorgang aufzuschäumen.

In einer besonders günstigen Ausgestaltung der Erfindung ist vorgesehen, daß die erste und die zweite Tiefziehpresse jeweils Pressenstempel und Preßformen gleicher Abmessungen aufweisen. Es wird damit vermieden, daß die Folie in der zweiten Tiefziehpresse nochmals verformt wird oder die Möglichkeit zum Schrumpfen hat.

Erfindungsgemäß erweist es sich dadurch, daß die erste Tiefziehpresse mit beheizbaren Werkzeugen ausgerüstet ist, als besonders günstig, daß während des Tiefziehvorganges eine weitere Aufschäumung der Folie in den Bereichen erfolgen kann, welche bisher nicht ausreichend aufgeschäumt sind oder welche, bedingt durch die Streckung beim Tiefziehen, zusätzlich aufzuschäumen sind, um eine gleichmäßige Dicke über den gesamten Querschnitt sicherzustellen. Eine Verdünnung der Wandstärken in den Eckenbereichen, wie dies aus dem Stand der Technik bekannt ist, kann somit auf sichere Weise vermieden werden.

Da erfindungsgemäß die Abkühlung der tiefgezogenen Folie in der zweiten Tiefziehpresse unter festem, formschlüssigem Einschluß der Folie erfolgt, werden Oberflächenunebenheiten, Schrumpfungen oder ähnliches verhindert, so daß das optische Aussehen der tiefgezogenen Folienbereiche höchsten Anforderungen entspricht.

Im folgenden wird die Erfindung anhand eines Ausführungsbeispiels in Verbindung mit der Zeichnung beschrieben. Dabei zeigt:

Fig. 1 eine schematische Seiten-Schnittansicht eines Ausführungsbeispiels der erfindungsgemäßen Vorrichtung im geöffneten Zustand;

Fig. 2 eine Seiten-Schnittansicht, ähnlich Fig. 1, im geschlossenen Zustand; und

Fig. 3 eine Draufsicht auf die in den Fig. 1 und 2 gezeigte Vorrichtung.

Die erfindungsgemäße Vorrichtung umfaßt ein Gestell 11, an welchem über einen Hebelmechanismus 12 ein Träger 13 höhenveränderbar geführt ist. An dem Träger 13 sind untere Heizplatten 2, 4 sowie Tiefziehformen 8, 10 einer ersten Tiefziehpresse 5 bzw. einer zweiten Tiefziehpresse 6 gelagert. Durch eine Verschiebung des Trägers 13 relativ zu dem Gestell 11, d. h. durch eine Höhenänderung des Trägers 13, welche beispielsweise mittels eines Exzenters, eines Kniehebelmechanismus oder unter Verwendung hydraulischer Betätigungselemente erfolgen kann, werden somit die Heizplatten 2, 4 und die Pressenformen 8, 10 in vertikaler Richtung bewegt.

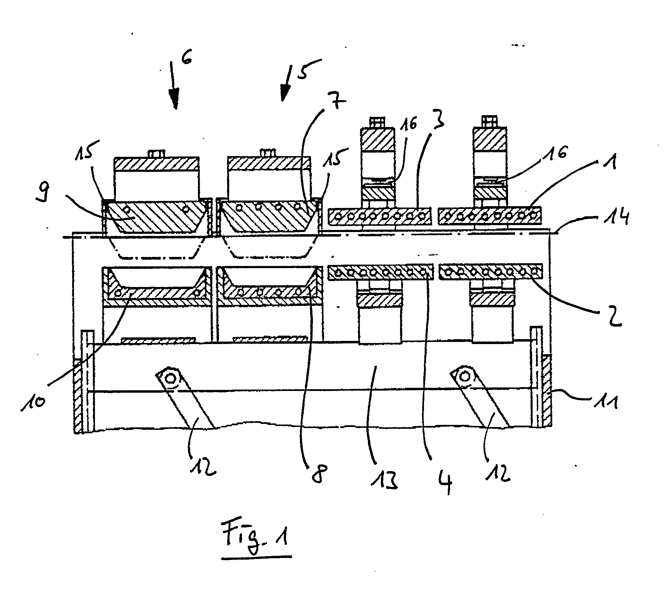

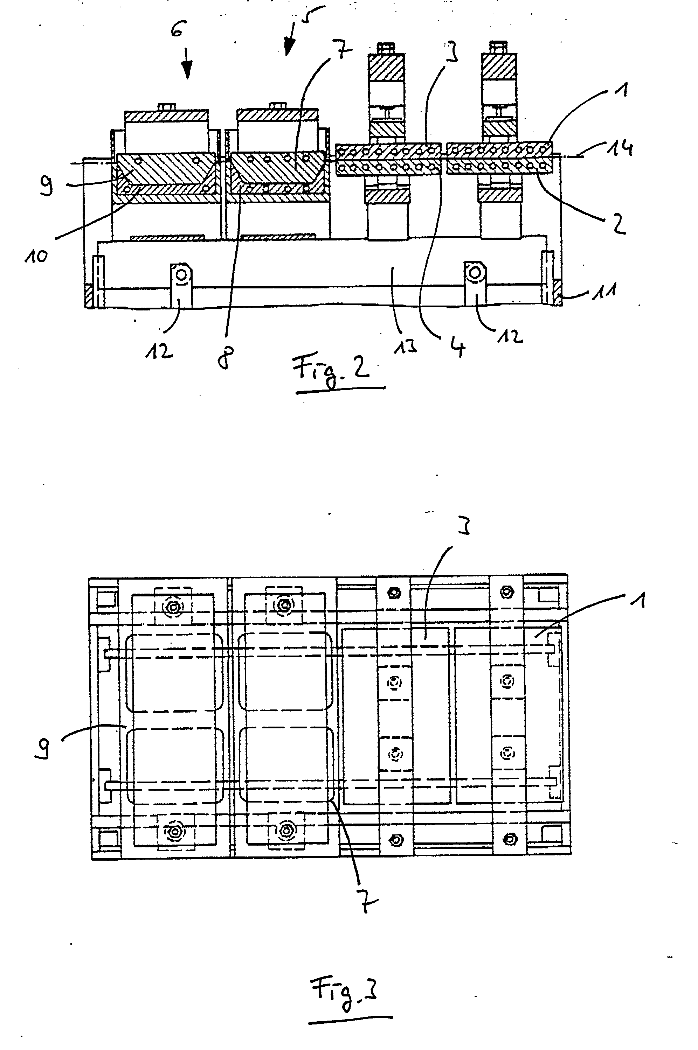

An dem Gestell 11 sind weiterhin obere Heizplatten 1, 3 sowie Pressenstempel 7, 9 der ersten Tiefziehpresse 5 und der zweiten Tiefziehpresse 6 gelagert. Die Heizplatten 1, 3 sowie die Pressenstempel 7, 9 sind, wie aus den Fig. 1 und 2 ersichtlich, in einem gewissen Bereich höhenveränderbar an dem Gestell 11 angeordnet, um eine Durchführung einer in den Fig. 1 und 2 nur schematisch dargestellten Folie 14 zwischen den einzelnen Bearbeitungsstationen zu ermöglichen. Zu diesem Zwecke sind die Pressenstempel 7, 9 in Führungen 15 gelagert. Die Heizplatten 1, 3 sind jeweils mit Betätigungseinrichtungen 16, welche beispielsweise in Form von Hydraulikzylindern ausgebildet sein können, verbunden.

Bei der gezeigten Vorrichtung sind die Heizplatten 1 bis 4 jeweils in Form von im wesentlichen ebenen Platten ausgebildet, welche, wie schematisch dargestellt, mit Heizeinrichtungen versehen sind. Es ist somit möglich, die Heiz platten 1 und 2 bzw. 3 und 4 in flächige Anlage gegen die Folie 1 zu drücken, um diese gleichmäßig zu erwärmen. Bei dem in Fig. 2 gezeigten geschlossenen Zustand weisen die Heizplatten 1 und 2 zueinander einen Abstand auf, welcher im wesentlichen der Dicke der nicht geschäumten Folie 14 entspricht, während die Heizplatten 3 und 4 in einem Abstand zueinander gehalten werden, welcher der Dicke der aufgeschäumten Folie 14 entspricht. In analoger Weise sind die Pressenwerkzeuge 7 und 8 bzw. 9 und 10 jeweils um die Dicke der aufgeschäumten Folie voneinander beabstandet.

Die erste Tiefziehpresse 5 ist so ausgebildet, daß der Pressenstempel 7 und die Pressenform 8 beheizbar sind, während der Pressenstempel 9 und die Tiefziehform 10 der zweiten Tiefziehpresse 6 kühlbar ausgebildet sind.

Die Fig. 3 zeigt eine Draufsicht auf die in den Fig. 1 und 2 gezeigte Vorrichtung. Dabei ist zu erkennen, daß die Pressenstempel 7 und 9 jeweils in Form von Doppelwerkzeugen ausgebildet sind, so daß bei Durchlauf der Folie 14 durch die Vorrichtung nebeneinander jeweils zwei tiefgezogene Behälterunterteile erzeugt werden können.

Die Erfindung ist nicht auf das gezeigte Ausführungsbeispiel beschränkt, vielmehr ergeben sich für den Fachmann im Rahmen der Erfindung vielfältige Abwandlungs- und Modifikationsmöglichkeiten.

## Ansprüche

1. Verfahren zum Tiefziehen einer durch Wärmeeinwirkung aufschäumbaren Folie, dadurch gekennzeichnet, daß die Folie durch Flächenberührung mit zumindest einer Heizplatte (1, 2) unter Verhinderung einer Aufschäumung erwärmt wird, daß die Folie nachfolgend unter flächigem Kontakt mit zumindest einer Heizplatte (3, 4) unter Aufschäumung erwärmt wird, daß die Folie nachfolgend mittels einer beheizten Tiefziehpresse (5) verformt wird und daß die verformte Folie in einer gekühlten Tiefziehpresse (6) abgekühlt wird.

2. Vorrichtung zum Tiefziehen einer durch Wärmeeinwirkung aufschäumbaren Folie, insbesondere zur Durchführung des Verfahrens nach Anspruch 1, gekennzeichnet durch zumindest eine im wesentlichen ebene Heizplatte (1, 2, 3, 4), eine in Durchlaufrichtung nachfolgend angeordnete, beheizbare erste Tiefziehpresse (5) und eine nachfolgend angeordnete, zweite Tiefziehpresse (6).

3. Vorrichtung nach Anspruch 2, dadurch gekennzeichnet, daß die zweite Tiefziehpresse (6) kühlbar ausgebildet ist.

4. Vorrichtung nach Anspruch 2 oder 3, dadurch gekennzeichnet, daß die erste Tiefziehpresse (5) einen beheizbaren Pressenstempel (7) und eine beheizbare Preßform (8) umfaßt.

5. Vorrichtung nach einem der Ansprüche 2 bis 4, dadurch gekennzeichnet, daß zwei jeweils mit einer Heizplatte (1, 2; 3, 4) versehene Bearbeitungsstationen vorgesehen sind.

6. Vorrichtung nach einem der Ansprüche 2 bis 5, dadurch gekennzeichnet, daß jeweils ein Paar von Heizplatten (1, 2; 3, 4) zur beidseitigen Erwärmung der Folie angeordnet sind.

7. Vorrichtung nach einem der Ansprüche 5 oder 6, dadurch gekennzeichnet, daß das erste Paar von Heizplatten (1, 2) zur Erwärmung der Folie in einen gegenseitigen Abstand bringbar ist, welcher der Dicke der nicht aufgeschäumten Folie entspricht.

8. Vorrichtung nach einem der Ansprüche 5 bis 7, dadurch gekennzeichnet, daß das zweite Paar (3, 4) von Heizplatten zur Erwärmung und zum Aufschäumen der Folie in einen gegenseitigen Abstand bringbar ist, welcher der Dicke der aufgeschäumten Folie entspricht.

9. Vorrichtung nach einem der Ansprüche 2 bis 8, dadurch gekennzeichnet, daß die erste (5) und die zweite (6) Tiefziehpresse jeweils Pressenstempel (7, 9) und Preßformen (8, 10) gleicher Abmessungen aufweisen.

Fig. 1

588246

Fig. 2

Fig. 3